# FASCICULE DE BREVET EUROPEEN

(11) **EP 2 709 122 B1**
(45) Date de publication et mention de la délivrance du brevet: **15.04.2015**
(21) Numéro de dépôt: 13178559.4
(22) Date de dépôt: 30.07.2013
(51) Int. Cl.: H01F 7/16

(54) **Dispositif d'entraînement linéaire électromagnétique comprenant un organe mobile pourvu d'une pluralité de masses aimantées.**
Elektromagnetische lineare Antriebsvorrichtung, die ein mobiles Organ umfasst, das mit einer Vielzahl von magnetisierten Massen ausgestattet ist
Electromagnetic linear drive device including a mobile member provided with a plurality of magnetised masses

(30) Priorité: 30.08.2012 FR 1258090
(43) Date de publication de la demande: 19.03.2014
(73) Titulaire: XAP, 30420 Calvisson (FR)
(72) Inventeur: Hardy, François, 30820 Caveirac (FR)
(74) Mandataire: Roman, Alexis

(56) Documents cités:
- FR-A1- 2 785 733
- FR-A1- 2 924 264
- JP-A- 7 329 783

## Description

### Domaine technique de l'invention.

L'invention a pour objet un dispositif d'entraînement linéaire électromagnétique comprenant un organe mobile pourvu d'une pluralité de masses aimantées. Elle a également pour objet l'utilisation de ce dispositif pour actionner un sélecteur de boîte de vitesses ou d'embrayage.

L'invention concerne le domaine technique général des moteurs linéaires électromagnétiques.

### État de la technique.

On connaît par les documents brevets FR 2.886.485 (NORTIA CONSULT), FR 2.957.713 (ADULIS), FR 2.818.430 (RENAULT), JP 7.329783 (HIGASHI NIPPON RYOKAKU TETSUDO) ou par l'article: « J.C VANNIER, P. VIDAL, A. AGNERAY : Design and sizing of electromagnetic linear actuactors for valve applications ; SENSACT, Gif-sur-Yvette ; 2007 », des dispositifs d'entraînement linéaire électromagnétiques comportant :
- un châssis ferromagnétique dont les parois délimitent un espace interne comprenant au moins un entrefer magnétique,
- un organe mobile comportant plusieurs masses aimantées, ledit organe étant apte à coulisser linéairement dans ledit entrefer selon une direction de déplacement, entre deux positions extrêmes, lesdites masses aimantées étant agencées sur ledit organe mobile de manière à créer chacune un champ magnétique, qui dans ledit entrefer magnétique, est quasi perpendiculaire à ladite direction de déplacement,
- au moins une paire d'enroulements de spires électromagnétiques disposée à l'intérieur dudit espace interne, lesdits enroulements étant alignés le long de la direction de déplacement dudit organe mobile. Ces enroulements sont disposés de part et d'autre de l'organe mobile, symétriquement par rapport à la direction de déplacement. Ils sont chacun monté sur un noyau ferromagnétique disposé dans l'espace interne du châssis, perpendiculairement à la direction de déplacement de l'organe mobile, lesdits noyaux ferromagnétiques délimitant lesdits entrefers.

L'introduction d'un courant dans les enroulements de spires électromagnétiques traversées par les champs magnétiques induits par les masses aimantées, génèrent des forces de Laplace qui, pour les portions de spires perpendiculaires à l'axe de déplacement de l'organe mobile, seront dans son axe de déplacement, entrainant ainsi le déplacement dudit organe. Il est possible de contrôler le déplacement de l'organe mobile en fonction de l'intensité et du sens du courant circulant dans les enroulements. Le fonctionnement de ce type de dispositif d'entraînement linéaire électromagnétique est bien connu de l'homme du métier, lequel pourra notamment se référer aux documents précités.

Le document brevet FR 2.886.485 précité décrit, en référence à sa figure 3, un mode de réalisation dans lequel les parois du châssis ferromagnétique délimitent un espace interne comprenant au moins deux entrefers magnétiques et dans lequel sont disposées au moins deux paires d'enroulements de spires électromagnétiques. Les enroulements sont juxtaposées côte-à-côte de manière à présenter des zones adjacentes agencées entre les deux entrefers et dans lesquelles les portions de spires sont situées dans des plans perpendiculaires à la direction de déplacement de l'organe mobile. Cette configuration permet d'augmenter la course de déplacement de l'organe mobile, mais ne permet pas d'augmenter la puissance mécanique générée par ledit organe mobile.

La force de Laplace générée sur les masses aimantées n'est maximale que lorsqu'une des masses est positionnée en vis-à-vis des portions de spires adjacentes. En effet, dans cette position, pratiquement la totalité du flux magnétique induit par la masse aimantée coupe ces portions de spires adjacentes. Or, la configuration de l'organe mobile implique que les masses aimantée ne sont que temporairement positionnées en vis-à-vis des portions de spires adjacentes. La force de Laplace générée n'est donc pas maximale sur la totalité du déplacement de l'organe mobile.

En outre, les flux magnétiques induits par les enroulements interfèrent avec le flux magnétique induit par les masses aimantées. Les flux magnétiques induits par les bobines suivent le même passage que les flux induits par les masses aimantées, ces interférences provoquant des saturations magnétiques qui perturbent la génération de la force de Laplace. On est alors contraint de surdimensionner le châssis ferromagnétique (en prévoyant notamment des épaisseurs excessives) et d'utiliser des enroulements de grandes tailles, afin d'obtenir un rapport poids/puissance optimal. Ce surdimensionnement implique de fait un encombrement excessif qui est rédhibitoire dans certaines applications, par exemple dans le milieu automobile ou aéronautique.

Egalement, une partie des flux magnétiques induits par les masses aimantées passe par les parois d'extrémités formant butée de fin de course et non pas par les bobines. Le flux magnétique qui passe par les parois d'extrémités n'est pas donc susceptible de générer une force de Laplace, laquelle est forcément réduite.

Un autre problème réside dans le fait que lorsqu'aucun courant ne traverse les enroulements, les masses aimantées ont tendance à venir se plaquer contre les parois d'extrémités métalliques. En l'absence de courant, le chariot mobile a donc trois positions possibles : soit centré entre les deux entrefers, soit plaqué à l'une des parois d'extrémité. Cela tend à compliquer énormément l'asservissement en position du chariot mobile.

La demanderesse a pu constater que pour que l'organe mobile développe un effort significatif et puisse par exemple actionner un sélecteur de boîte de vitesses ou d'embrayage d'un véhicule automobile, il est nécessaire de prévoir des enroulements de spires électromagnétiques de grandes tailles ainsi qu'un courant de commande important (forte intensité et forte tension, par exemple 80 Ampères sous 12 Volts). L'encombrement de ce dispositif est donc important et son rendement global (puissance électrique/puissance mécanique) médiocre. En outre, compte tenu de la taille des composants et notamment de la taille des enroulements de spires électromagnétiques, le temps de réaction de l'organe mobile n'est pas optimal lorsque l'on change le sens du courant dans lesdits enroulements.

Le document brevet JP 7.329783 divulgue un dispositif d'entrainement linéaire conforme au préambule de la revendication principale. Sur la figures 9 de ce document, au moins une des masses aimantées est dimensionnée de manière à avoir au moins une portion positionnée en vis-à-vis de certaines portions de spires situées dans les zones adjacentes lorsque l'organe mobile se déplace entre les deux positions extrêmes. Ce dispositif a toutefois un encombrement relativement élevé, et en tout état de cause, certaines des zones adjacentes ne contribuent pas à développer une force de Laplace. Le rendement global de ce dispositif n'est donc pas optimal.

L'invention vise à remédier à cet état des choses. Plus particulièrement, un objectif de l'invention est d'améliorer le rendement global de ce type de dispositif d'entraînement linéaire.

Un autre objectif de l'invention est de diminuer l'encombrement de ce type de dispositif d'entraînement linéaire, tout en conservant la même puissance mécanique développée.

L'invention a encore pour objectif d'améliorer le temps de réaction de l'organe mobile dans ses déplacements.

### Divulgation de l'invention.

La solution proposée par l'invention est un dispositif d'entraînement linéaire électromagnétique du type décrit précédemment et comportant :
- un châssis ferromagnétique dont les parois délimitent un espace interne comprenant au moins deux entrefers magnétiques,
- un organe mobile comportant une pluralité de masses aimantées, ledit organe étant apte à coulisser linéairement dans lesdits entrefers, selon une direction de déplacement, entre deux positions extrêmes, lesdites masses aimantées étant agencées sur ledit organe mobile de manière à pouvoir traverser lesdits entrefers magnétiques,
- au moins deux paires d'enroulements de spires électromagnétiques disposées à l'intérieur dudit espace interne, lesdits enroulements étant alignés le long de la direction de déplacement dudit organe mobile, les enroulements de chaque dite paire étant disposés de part et d'autre dudit organe mobile, symétriquement par rapport à ladite direction de déplacement, lesdits enroulements étant chacun monté sur un noyau ferromagnétique disposé dans ledit espace interne, perpendiculairement à la direction de déplacement dudit organe mobile, lesdits noyaux ferromagnétiques délimitant lesdits entrefers, lesdits enroulements étant juxtaposées côte-à-côte de manière à présenter des zones adjacentes agencées entre les deux dits entrefers et dans lesquelles les portions de spires sont situées dans au moins un plan perpendiculaire à ladite direction de déplacement.

Ce dispositif est remarquable en ce que :
- au moins une des masses aimantées est dimensionnée de manière à avoir au moins une portion constamment positionnée en vis-à-vis desdites portions de spires situées dans lesdites zones adjacentes lorsque l'organe mobile se déplace entre les deux positions extrêmes,
- la position des masses aimantées sur l'organe mobile est telle que chaque entrefer magnétique est constamment traversé par au moins une desdites masses aimantées lorsque ledit organe mobile se déplace entre les deux positions extrêmes.

Dans cette configuration, des forces de Laplace d'intensité maximale s'appliquent donc en permanence sur l'organe mobile. De fait, pour une même puissance électrique (courant de même intensité et de même tension), la puissance mécanique est décuplée. Le rendement global du dispositif est donc amélioré par rapport au dispositif décrit en référence à la figure 3 du document brevet FR 2.886.485 précité. En outre, il est maintenant possible d'utiliser des composants plus petits, notamment des enroulements de taille réduite, pour développer la même puissance mécanique que celle développée par le dispositif connu de l'art antérieur. Et cette diminution de la taille des enroulements s'accompagne d'un temps de réaction plus court.

D'autres caractéristiques techniques avantageuses du dispositif objet de l'invention sont listées ci-dessous, ces différentes caractéristiques pouvant être considérées seules ou en combinaison, indépendamment des caractéristiques techniques remarquables définies ci-dessus :
- au moins une des masses aimantées est préférentiellement dimensionnée de manière à avoir au moins une portion constamment située dans chacun des entrefers magnétiques lorsque ledit organe mobile se déplace entre les deux positions extrêmes.
- l'organe mobile comporte préférentiellement une masse aimantée centrale et deux masses aimantées latérales disposées de part et d'autre de ladite masse aimantée centrale, lesdites masses étant alignées selon la direction de déplacement dudit organe mobile.
- les deux masses aimantées latérales ont préférentiellement la même polarité, la masse aimantée centrale ayant une polarité inverse.
- la masse aimantée centrale a préférentiellement une longueur supérieure à celle des deux masses aimantées latérales.
- préférentiellement, la longueur de la masse aimantée centrale est telle qu'elle comprend une portion constamment positionnée en vis-à-vis des portions de spires situées dans les zones adjacentes, lorsque l'organe mobile se déplace entre les deux positions extrêmes.
- les paires d'enroulements de spires électromagnétiques sont juxtaposées l'une par rapport à l'autre, le courant ayant préférentiellement la même direction et le même sens dans les portions de spires situées dans les zones adjacentes desdits enroulements.
- le châssis ferromagnétique comprend avantageusement deux parois longitudinales parallèles contre lesquelles sont agencées les paires d'enroulements de spires électromagnétiques, lesdites parois longitudinales étant dépourvues de paroi latérale susceptible de définir les deux positions extrêmes de l'organe mobile, ledit organe mobile étant formé par un chariot supportant les masses aimantées, ledit chariot comprenant des éléments de guidage s'étendant hors dudit châssis, lesquels éléments traversent des parois latérales au niveau d'ouvertures, lesdites parois latérales étant réalisées dans un matériau non ferromagnétique.
- le châssis ferromagnétique peut comprendre des parois transversales disposées de part et d'autre des noyaux ferromagnétiques, lesdites parois transversales étant parallèles et s'étendant perpendiculairement aux parois longitudinales dudit châssis.
- les noyaux ferromagnétiques peuvent être creux.
- le châssis ferromagnétique peut être réalisé en deux parties identiques disposées symétriquement par rapport à la direction de déplacement de l'organe mobile.
- le châssis ferromagnétique peut être recouvert d'une carcasse de protection réalisée dans un matériau non ferromagnétique, de la résine étant injectée dans ladite carcasse.
- cette carcasse comporte avantageusement des rainures ou ailettes pour évacuer les calories générées par les enroulements de spires électromagnétiques.
- le châssis peut comporter des encoches de position configurées pour dévier une partie des flux magnétiques induits par les masses aimantées, un capteur a effet Hall étant positionné dans chacune desdites encoches.

Un autre aspect de l'invention concerne l'utilisation du dispositif conforme à l'une des caractéristiques précédentes, pour actionner un sélecteur de boîte de vitesses ou d'embrayage d'un véhicule automobile, ledit sélecteur étant relié à l'organe mobile.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 est une vue éclatée d'un dispositif conforme à l'invention,
- la figure 2 est une vue en coupe longitudinale d'un dispositif conforme à l'invention, l'organe mobile étant dans une première position extrême,
- la figure 3 est une vue en coupe longitudinale d'un dispositif conforme à l'invention, l'organe mobile étant situé entre les deux positions extrêmes,
- la figure 4 est une vue en coupe longitudinale d'un dispositif conforme à l'invention, l'organe mobile étant dans la seconde position extrême,
- la figure 5 est une vue en coupe selon A-A du dispositif de la figure 4,
- la figure 6 est une vue en perspective montrant un châssis ferromagnétique conforme à l'invention sur lequel sont montés deux enroulements juxtaposés, l'ensemble étant schématisé en coupe longitudinale,
- la figure 7 est une vue en perspective montrant un châssis ferromagnétique dans une variante de réalisation et sur lequel sont montés deux enroulements juxtaposés, l'ensemble étant schématisé en coupe longitudinale,
- la figure 8 est une vue en perspective montrant un châssis ferromagnétique dans une autre variante de réalisation et sur lequel sont montés deux enroulements juxtaposés.

### Modes de réalisation de l'invention.

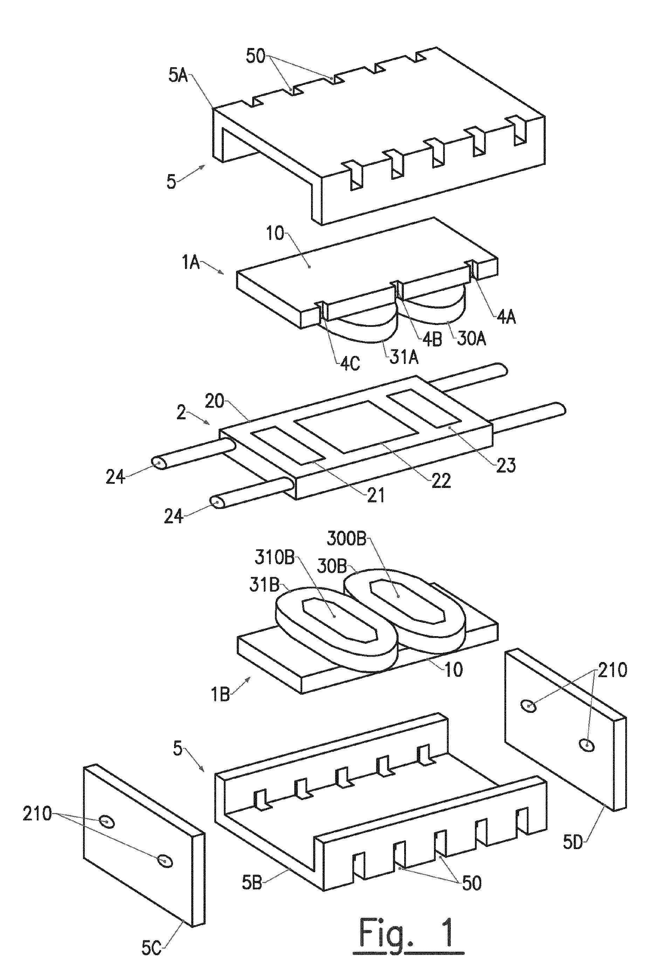

En se rapportant à la figure 1, le dispositif objet de l'invention comporte un châssis ferromagnétique 1 typiquement réalisé dans un matériau à base de fer, cobalt, nickel, acier magnétique, etc. Pour simplifier le montage, le châssis 1 est avantageusement réalisé en deux parties identiques 1A, 1B. On peut toutefois prévoir d'utiliser un châssis 1 d'une seule pièce. Chacune des parties 1A, 1B du châssis 1 a préférentiellement la forme d'une plaque plane et présente une paroi longitudinale 10.

Selon le mode préféré de réalisation schématisé sur les figures 1, 6 et 8, et contrairement au montage décrit dans le document brevet FR 2.886.485 précité, les parois longitudinales 10 sont dépourvues de paroi latérale susceptible de définir les deux positions extrêmes de l'organe mobile 2.

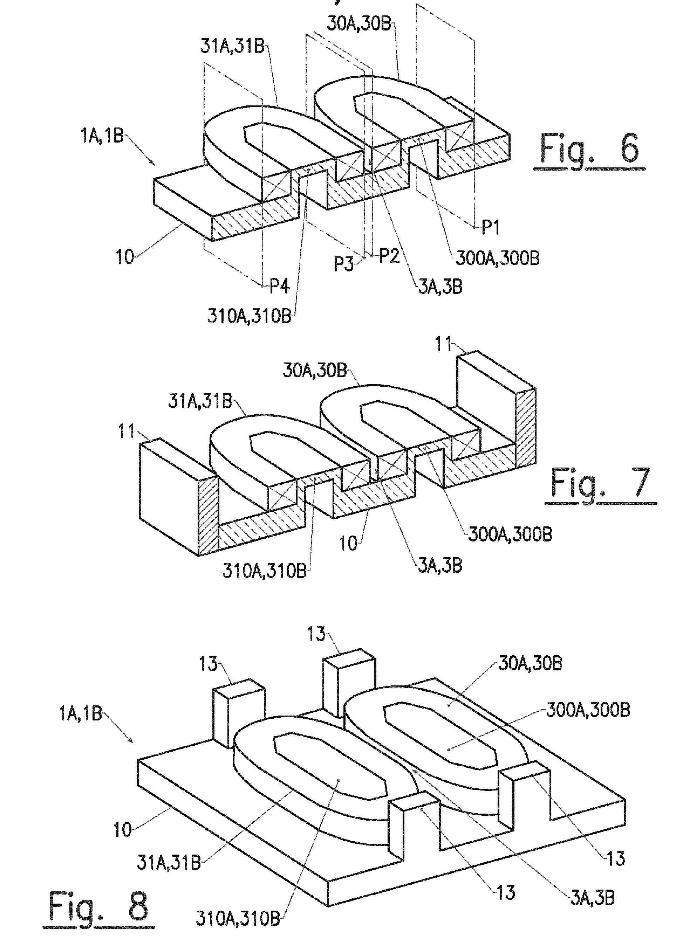

Dans la variante de réalisation schématisée sur la figure 7, la paroi longitudinale 10 est pourvue, à ses extrémités latérales, de deux parois latérales parallèles 11 s'étendant perpendiculairement à ladite paroi longitudinale. Ces parois latérales 11 sont réalisées dans un matériau non ferromagnétique, par exemple en aluminium, en matière plastique ou en carbone.

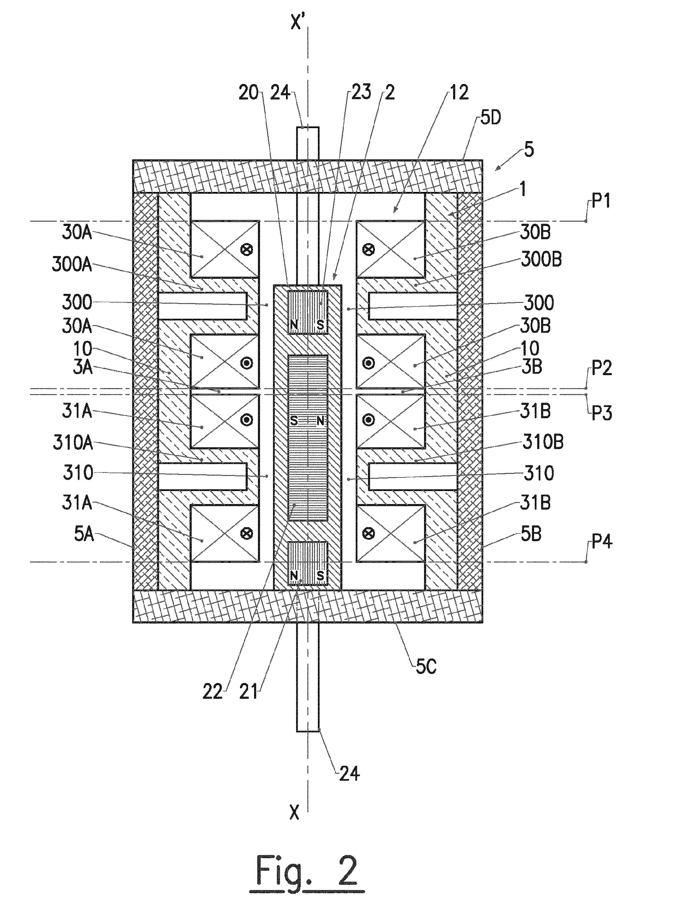

En se référant aux figures 2 à 4, les deux parties 1A et 1B sont assemblées de manière à ce que les parois longitudinales 10 soient parallèles. Dans l'exemple de réalisation des figures annexées, le châssis 1 a la forme d'un cadre rectangulaire. Les parois 10 délimitent ainsi un espace interne 12, à l'intérieur duquel est monté l'organe mobile 2 apte à coulisser linéairement selon une direction de déplacement X-X'. Sur les figures annexées, cette direction de déplacement est parallèle aux parois longitudinales 10, les parties 1A, 1B étant disposées symétriquement par rapport à cette direction de déplacement.

Le châssis 1 est recouvert d'une carcasse 5 réalisée dans un matériau non ferromagnétique, par exemple en aluminium, en matière plastique ou en carbone. En se rapportant à la figure 1, cette carcasse 5 peut comprendre deux parties 5A, 5B qui s'agencent contre les parois longitudinales 10 du châssis 1, et deux parties latérales 5C, 5D qui s'agencent contre les extrémités latérales des parois longitudinales 10 dudit châssis. L'ensemble de ces parties 5A, 5B, 5C, 5D se combine pour former une sorte de boîte dans laquelle est maintenu le châssis 1 est à l'intérieur de laquelle est injectée de la résine.

Au moins deux paires d'enroulements de spires électromagnétiques, respectivement 30A-30B et 31A, 31B, sont disposées à l'intérieur de l'espace interne 12. En pratique, chaque enroulement 30A, 30B, 31A, 31B est constitué d'un fil de cuivre enroulé fixement parallèlement à la direction de déplacement X-X'. Les enroulements 30A, 30B, 31A, 31B sont alignés le long des parois longitudinales 10, de part et d'autre de l'organe mobile 2, symétriquement par rapport à la direction de déplacement X-X'.

En se rapportant plus particulièrement aux figures 2 à 4, chaque enroulement 30A, 30B, 31A, 31B est enroulé fixement autour d'un noyau ferromagnétique, respectivement 300A, 300B, 310A, 310B. Ces derniers sont fixés sur les parois longitudinales 10, perpendiculairement à la direction de déplacement X-X', en étant situés dans l'espace interne 12. Les noyaux 300A, 300B et les noyaux 310A, 310B se font face et sont disposés symétriquement par rapport à la direction de déplacement X-X'. En pratique, ces noyaux 300A, 300B, 310A, 310B se présentent sous la forme de protubérances qui se projettent en saillie vers l'espace interne 12. Ils sont positionnés de sorte que les deux paires d'enroulements de spires électromagnétiques 30A-30B et 31A-31B soient juxtaposées l'une par rapport à l'autre. Les noyaux 300A, 300B, 310A, 310B peuvent être rapportés ou être obtenus directement par moulage ou usinage lors de la conception du châssis 1. Ils sont réalisés dans le même matériau que ce dernier. Les noyaux qui se font face, respectivement 300A-300B et 310A-310B, délimitent des entrefers, respectivement 300, 310.

Comme cela apparait clairement sur les figures 1, 2, 3, 4, 6 et 7, les enroulements 30A, 30B, 31A, 31B sont juxtaposées côte-à-côte de manière à présenter des zones adjacentes 3A, 3B agencées entre les deux dits entrefers 300, 310. Dans ces zones adjacentes 3A, 3B, les portions de spires sont situées dans des plans P2, P3 qui sont perpendiculaires à la direction de déplacement X-X' (figures 2 à 5). Dans le cas où les enroulements 30A-31A et 30B-31B sont accolés, les plans P2, P3 sont confondus, les portions de spires adjacentes étant situées dans ce plan commun. A l'opposé des zones adjacentes 3A, 3B, les enroulements 30A, 30B, 31A, 31 B comprennent également chacun une portion de spires situées dans un plan P1, P4 qui est perpendiculaire à la direction de déplacement X-X' (figures 2 à 5). La force de Laplace est maximale lorsque les lignes des champs magnétiques générés par les masses aimantées 21, 22, 23 de l'organe mobile 2 coupent les enroulements 30A, 30B, 31A, 31 B au niveau de ces portions de spires.

Pour augmenter l'intensité des forces de Laplace susceptibles de s'appliquer sur l'organe mobile 2, et lorsque les paires d'enroulements 30A-30B, 31A-31B sont juxtaposées l'une par rapport à l'autre, le courant a la même direction et le même sens dans les portions de spires situées dans les zones adjacentes 3A, 3B desdits enroulements.

En se référant à la figure 1, pour évacuer les calories générées par les enroulements 30A, 30B, 31A, 31B, la carcasse 5 comporte avantageusement des rainures ou des ailettes 50.

L'organe mobile 2 est apte à coulisser linéairement dans les entrefers 300, 310, selon la direction X-X', entre deux positions extrêmes. En se rapportant aux figures 2 à 5, ce sont les parois latérales 5C, 5D de la carcasse 5 qui définissent ces deux positions extrêmes, l'organe mobile 2 venant buter contre ces parois. On pourrait toutefois prévoir d'intégrer d'autres moyens de buter à l'intérieur de l'espace interne 12.

L'organe mobile 2 comporte une pluralité de masses aimantées 21, 22, 23. En pratique, ces masses aimantées 21, 22, 23 sont de forme rectangulaire et sont minces, leurs tranches étant orientées parallèlement aux parois longitudinales 10 du châssis 1. Plus particulièrement, les masses aimantées 21, 22, 23 sont agencées sur l'organe mobile 2 de manière à créer chacune un champ magnétique, qui dans les entrefers 300, 310, est quasi perpendiculaire à la direction de déplacement X-X'. En pratique, les masses aimantées 21, 22, 23 consistent en des aimants permanents réalisés dans un matériau magnétique du type néodyme-fer-bore ou samarium-cobalt. Lorsque les lignes de champs des masses aimantées 21, 22, 23 coupent les portions de spires situées dans les plans P1, P2, P3, P4 précités, la force de Laplace appliquée sur l'organe mobile 2 est maximale.

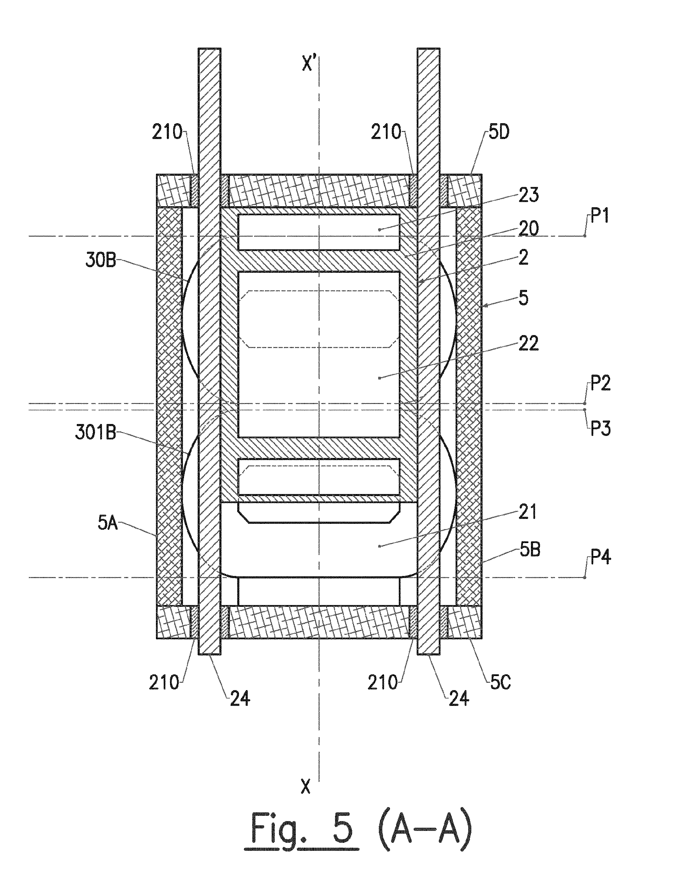

En se rapportant à la figure 1, l'organe mobile 2 est préférentiellement formé par un chariot 20 supportant les masses aimantées 21, 22, 23. Pour ne pas perturber le champ magnétique généré par les masses aimantées 21, 22, 23, le chariot 20 est réalisé dans un matériau non ferromagnétique, par exemple en aluminium, en carbone ou en plastique. Le chariot 20 comprend des éléments de guidage 24 s'étendant hors du châssis 1, au niveau d'ouvertures 210 positionnées dans les parois latérales 5C, 5D de la carcasse 5 (figures 1 et 5). Ces parois latérales 5C, 5D étant réalisées dans un matériau non ferromagnétique, les éléments de guidage 24 ainsi que les ouvertures 210 sont de cette manière située en dehors du parcours des lignes de champs magnétiques circulant dans l'espace interne 12 et/ou dans le châssis 1. Contrairement aux dispositifs connus de l'art antérieur, le bouclage du champ magnétique n'est nullement perturbé par le système de guidage de l'organe mobile 2. Les ouvertures 210 sont réalisées dans les parois latérales 5C, 5D de la carcasse 5, des paliers lisses et/ou des bagues pouvant être prévus pour limiter les frottements. Les éléments de guidage 24 sont situés dans un plan qui est parallèle aux parois longitudinales 10 du châssis 1 et se présentent sous la forme de tiges cylindriques disposées de part et d'autre des masses aimantées 21, 22, 23.

L'introduction de courant dans les enroulements 30A, 30B, 31A, 31B génère, sur les masses aimantées 21, 22, 23, des forces électromagnétiques de Laplace selon la direction de déplacement X-X'. Si le sens du champ magnétique généré par les masses aimantées 21, 22, 23 est constant dans les entrefers 300, 310, celui du champ magnétique généré par les enroulements 30A, 30B, 31A, 31B dépend du sens du courant qui les parcourt. En modifiant le sens du courant dans les enroulements 30A, 30B, 31A, 31B, il est alors possible de modifier le sens de la force de Laplace qui s'applique sur les masses aimantées 21, 22, 23 et donc le sens de déplacement de l'organe mobile 2. De même, en modifiant l'intensité du courant dans les enroulements 30A, 30B, 31A, 31B, on peut modifier l'intensité des forces électromagnétiques de Laplace qui s'appliquent sur les masses aimantées 21, 22, 23, et donc l'intensité de l'effort développé par l'organe mobile 2. Des moyens de commande (non représentés) associés aux enroulements 30A, 30B, 31A, 31B, permettent de changer le sens et l'intensité du courant dans lesdits enroulements et donc le sens de déplacement de l'organe mobile et l'intensité de l'effort qu'il développe. Ces moyens de commande sont connus de l'Homme du métier.

Des capteurs de position sont disposés sur le châssis 1. Préférentiellement, un capteur central est positionné entre les deux entrefers 300, 310, les autres capteurs étant positionnés entre lesdits entrefers et les positions extrêmes de l'organe mobile 2. Le capteur central est optionnel. En pratique, ces capteurs sont montés sur un circuit imprimé fixé sur la tranche d'une des parois longitudinales 10 du châssis 1. On utilise préférentiellement des capteurs à effet Hall configurés pour capter une partie des flux magnétiques qui circulent dans le châssis 1. En mesurant la variation de l'intensité du champ magnétique, on peut déduire la position de l'organe mobile 2. Comme cela apparait sur la figure 1, des encoches de position 4A, 4B et 4C sont réalisées sur la tranche d'une des parois longitudinales 10 du châssis 1. D'autres positions des encoches peuvent toutefois être envisagées. Une partie des flux magnétiques induits par les masses amiantées 21, 22, 23 sont déviées dans ces encoches 4A, 4B et 4C. En positionnant un capteur à effet Hall dans chacune de ces encoches4A, 4B et 4C, il est possible de mesurer ces flux magnétiques déviés, et déterminer ainsi la position de l'organe mobile 2. Il est également possible de prévoir des capteurs de vitesse sur le châssis 1.

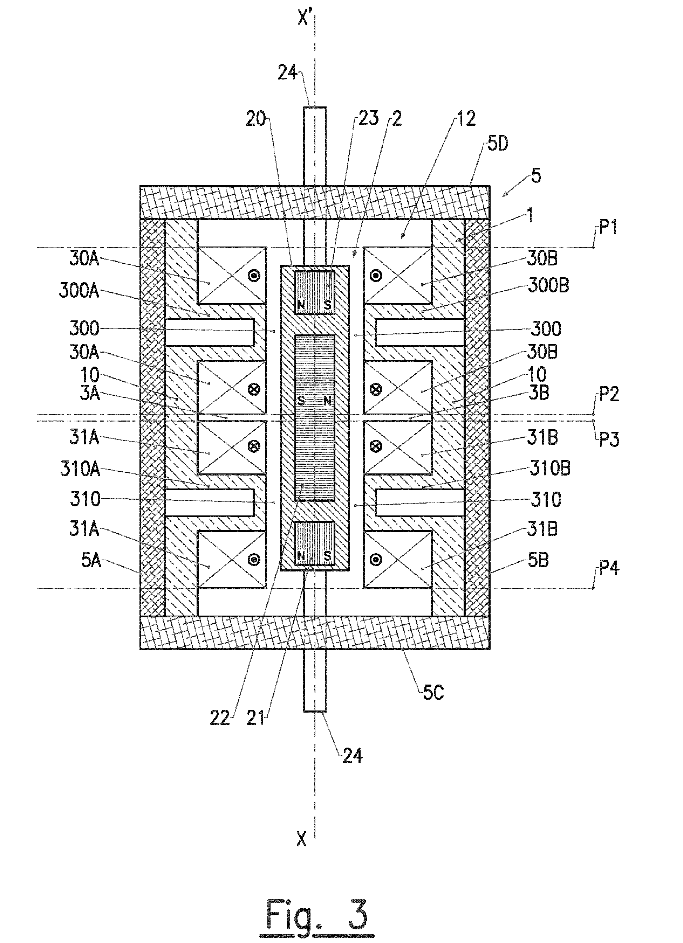

Au moins une des masses aimantées 22 est dimensionnée de manière à avoir au moins une portion constamment positionnée en vis-à-vis des portions de spires situées dans les zones adjacentes 3A, 3B, lorsque l'organe mobile 2 se déplace entre les deux positions extrêmes. De cette manière, les lignes du champ magnétique générées par cette masse aimantée 22 coupent constamment les portions de spires adjacentes situées dans les plans P2 et P3 (ou dans un éventuel plan commun). La masse aimantée 22 est donc constamment soumise à une force de Laplace d'intensité maximale, tout au long du déplacement de l'organe mobile 2. L'effort généré par l'organe mobile 2 est donc décuplé par rapport à celui généré par le dispositif divulgué sur la figure 3 du document brevet FR 2.886.485 précité. Il est ainsi possible d'utiliser le dispositif objet de l'invention pour actionner un sélecteur de boîte de vitesses ou d'embrayage d'un véhicule automobile, ledit sélecteur étant relié à l'organe mobile 2.

Dans le mode de réalisation préférée de l'invention qui est illustré sur les figures annexées, l'organe mobile 2 comporte au moins une masse aimantée centrale 22 et au moins deux masses aimantées latérales 21, 23 disposées de part et d'autre de ladite masse aimantée centrale. La demanderesse a pu constater que cette configuration permettait d'obtenir des résultats optimums en matière de rendement et de compacité. Un nombre supérieur de masses aimantées, ainsi qu'un nombre supérieur d'enroulements et d'entrefers peut toutefois être prévu, pour autant qu'au moins une des masses aimantées soit dimensionnée de manière à avoir au moins une portion constamment positionnée en vis-à-vis des portions de spires adjacentes (c'est-à-dire qui sont perpendiculaires à l'axe de déplacement X-X') lorsque l'organe mobile se déplace entre les deux positions extrêmes.

Ces masses aimantées 21, 22, 23 sont alignées selon la direction de déplacement X-X'. Les deux masses aimantées latérales 21, 23 ont la même polarité, la masse aimantée centrale ayant une polarité inverse. Sur les figures 2 à 4, les masses aimantées latérales 21, 23 ont une polarité Sud S située à droite et une polarité nord N située à gauche, tandis que la masse aimantée centrale a une polarité Sud S située à gauche et une polarité nord N située à droite. Une configuration inverse est bien entendu envisageable.

Selon une caractéristique avantageuse de l'invention, au moins une des masses aimantées 21, 22, 23 est dimensionnée de manière à avoir au moins une portion constamment située dans chacun des entrefers 300, 310 lorsque l'organe mobile 2 se déplace entre les deux positions extrêmes. En pratique, la masse aimantée centrale 22 a une longueur supérieure à celle des deux masses aimantées latérales 21 et 23. La longueur de la masse aimantée centrale 22 est telle que durant le déplacement de l'organe mobile entre les deux positions extrêmes, elle ait une portion qui soit en permanence située dans un des entrefers 300, 310 et notamment qui soit constamment positionnée en vis-à-vis des portions de spires situées dans les zones adjacentes 3A, 3B.

Sur la figure 2, lorsque l'organe mobile 2 est dans la première position extrême, l'entrefer supérieur 300 est traversé par la masse aimantée latérale supérieure 23 et l'entrefer inférieur 310 est traversé par la masse aimantée centrale 22. Cette dernière a une portion située en vis-à-vis des zones adjacentes 3A, 3B. En outre, une partie de la masse aimantée latérale inférieure 21 est située en vis-à-vis des spires contenues dans le plan P4. Dans cette configuration, l'organe mobile 2 a donc deux portions qui sont soumises à des forces de Laplace d'intensité maximale.

Lorsque l'organe mobile 2 est situé au milieu des deux positions extrêmes (figure 3), l'entrefer supérieur 300 est traversé par la masse aimantée latérale supérieure 23 et une partie de la masse aimantée centrale 22, l'entrefer inférieur 310 étant traversé par la masse aimantée latérale inférieure 21 et une partie de ladite masse aimantée centrale. Cette dernière a encore une portion située en vis-à-vis des zones adjacentes 3A, 3B.

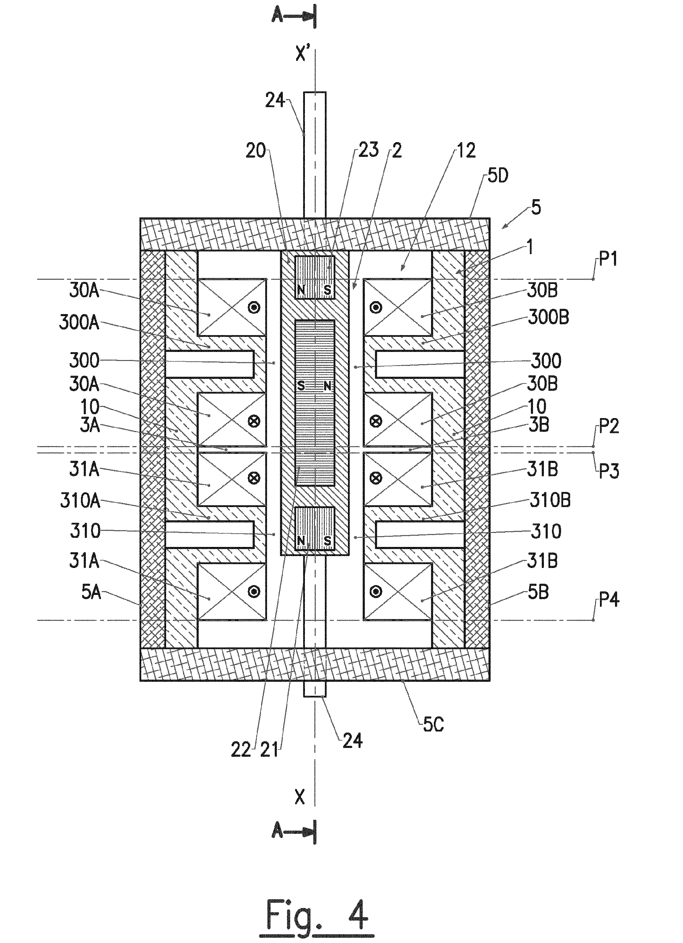

Enfin, lorsque l'organe mobile est dans la seconde position extrême (figure 4), l'entrefer supérieur 300 est traversé par la masse aimantée centrale 22, l'entrefer inférieur 310 étant traversé par la masse aimantée latérale inférieure 21. La masse aimantée centrale 22 garde une portion qui est située en vis-à-vis des zones adjacentes 3A, 3B. En outre, une partie de la masse aimantée latérale supérieure 23 est située en vis-à-vis des spires contenues dans le plan P1. Dans cette configuration, l'organe mobile 2 a donc deux portions qui sont soumises à des forces de Laplace d'intensité maximale.

De nombreux avantages découlent du fait que les parois longitudinales 10 du châssis 1 sont dépourvues de paroi latérale, ou que les parois latérales 11 sont réalisées dans un matériau amagnétique (figure 7).

Tout d'abord, les flux magnétiques induits par les masses aimantées, notamment latérales 21 et 23, ne peut plus se boucler aux extrémités latérales dudit châssis (à l'inverse du montage décrit dans le document brevet FR 2.886.485 précité). Au contraire, les lignes de champs tendent davantage à se boucler dans les enroulements 30A, 30B, 31A, 31B et à couper les spires contenues dans les plans P1, P2, P3 ou P4. Les forces de Laplace générées ont ainsi une intensité accrue.

La demanderesse a également pu constater que globalement, les flux magnétiques induits par les masses aimantées 21, 22, 23 ne suivaient plus le même passage que les flux magnétiques induits par les enroulements 30A, 30B, 31A, 31B. La superposition des flux est donc réduite. De fait, le matériau du châssis 1 est plus difficilement saturé d'un point de vue magnétique, ce qui permet de réduire les épaisseurs et le poids. Il est ainsi envisageable de concevoir des noyaux ferromagnétiques 300A, 300B, 310A, 310B creux comme cela apparait clairement sur les figures 6 et 7.

De plus, lorsqu'aucun courant ne traverse les enroulements 30A, 30B, 31A, 31B, les masses aimantées latérales 21 et 23 n'ont plus tendance à venir se plaquer contre une quelconque paroi d'extrémité métallique. En l'absence de courant, le chariot mobile 2 a donc une seule position possible qui est centrée entre les deux entrefers 300, 310. Toutefois, en fonction de la courbe de force à courant nul désiré, et pour minimiser les retours magnétiques, il peut être avantageux de fermer partiellement les extrémités latérales du châssis 1, avec un matériau ferromagnétique.

En se rapportant à la figure 8, le châssis 1 peut comprendre des parois transversales 13 disposées de part et d'autre des noyaux ferromagnétiques 300A, 300B, 310A, 310B. Ces parois transversales 13 sont parallèles et s'étendent perpendiculairement aux parois longitudinales 10 du châssis 1. Elles sont préférentiellement situées au niveau des bords longitudinaux des parois longitudinales 10. Sur la figure 8, les parois transversales 13 sont au nombre de quatre et sont disposées de part et d'autre de chaque noyau ferromagnétique 300A, 300B, 310A, 310B. On peut toutefois prévoir un agencement et un nombre différent de parois transversales 13. Ces parois transversales 13 ont pour fonction de concentrer les flux magnétiques induits par les enroulements 30A, 30B, 31A, 31 B, limitant les risques de saturation magnétique de la partie centrale du châssis 1, et notamment la saturation des noyaux ferromagnétiques 300A, 300B, 310A, 310B. Cette concentration des flux magnétiques induits par les enroulements 30A, 30B, 31A, 31B, au niveau des parois transversales 13, est accentuée lorsque les noyaux ferromagnétiques 300A, 300B, 310A, 310B sont évidés. Ainsi, les flux magnétiques induits par les masses aimantées 21, 22, 23 peuvent être davantage concentrés vers ces noyaux ferromagnétiques 300A, 300B, 310A, 310B non saturés pour couper les portions de spires adjacentes précitées. L'intensité des forces de Laplace générées est de fait augmentée.

## Revendications

1. Dispositif d'entraînement linéaire électromagnétique, comportant :
- un châssis (1) ferromagnétique dont les parois (10, 11) délimitent un espace interne (12) comprenant au moins deux entrefers magnétiques (300, 310),
- un organe mobile (2) comportant une pluralité de masses aimantées (21, 22, 23), ledit organe étant apte à coulisser linéairement dans lesdits entrefers, selon une direction de déplacement (X-X'), entre deux positions extrêmes, lesdites masses aimantées étant agencées sur ledit organe mobile de manière à pouvoir traverser lesdits entrefers magnétiques,
- au moins deux paires d'enroulements (30A, 30B, 31A, 31B) de spires électromagnétiques disposés à l'intérieur dudit espace interne, lesdits enroulements étant alignés le long de la direction de déplacement (X-X') dudit organe mobile, les enroulements de chaque dite paire étant disposés de part et d'autre dudit organe mobile, symétriquement par rapport à ladite direction de déplacement, lesdits enroulements étant chacun monté sur un noyau ferromagnétique (300A, 300B, 310A, 310B) disposé dans ledit espace interne, perpendiculairement à ladite direction de déplacement, lesdits noyaux ferromagnétiques délimitant lesdits entrefers (300, 310), lesdits enroulements étant juxtaposées côte-à-côte de manière à présenter des zones adjacentes (3A, 3B) agencées entre les deux dits entrefers et dans lesquelles les portions de spires sont situées dans au moins un plan perpendiculaire (P2, P3) à ladite
direction de déplacement,
**se caractérisant par le fait que** :
- au moins une des masses aimantées (22) est dimensionnée de manière à avoir au moins une portion constamment positionnée en vis-à-vis desdites portions de spires situées dans lesdites zones adjacentes (3A, 3B) lorsque ledit organe mobile (2) se déplace entre les deux positions extrêmes,
- la position des masses aimantées (21, 22, 23) sur l'organe mobile (2) est telle que chaque entrefer magnétique (300, 310) est constamment traversé par au moins une desdites masses aimantées lorsque ledit organe mobile se déplace entre les deux positions extrêmes.

2. Dispositif selon la revendication 1, dans lequel l'organe mobile (2) comporte une masse aimantée centrale (22) et deux masses aimantées latérales (21, 23) disposées de part et d'autre de ladite masse aimantée centrale, lesdites masses étant alignées selon la direction de déplacement (X-X') dudit organe mobile.

3. Dispositif selon la revendication 2, dans lequel les deux masses aimantées latérales (21, 23) ont la même polarité, la masse aimantée centrale (22) ayant une polarité inverse.

4. Dispositif selon l'une des revendications 2 ou 3, dans lequel la masse aimantée centrale (22) a une longueur supérieure à celle des deux masses aimantées latérales (21, 23).

5. Dispositif selon la revendication 4, dans lequel la longueur de la masse aimantée centrale (22) est telle qu'elle comprend une portion constamment positionnée en vis-à-vis desdites portions de spires situées dans lesdites zones adjacentes (3A, 3B), lorsque l'organe mobile (2) se déplace entre les deux positions extrêmes.

6. Dispositif selon l'une des revendications 1 à 5, dans lequel les enroulements (30A, 30B, 31A, 31B) sont traversés par courant, lequel courant est appliqué de manière à avoir la même direction et le même sens dans les portions de spires situées dans les zones adjacentes desdits enroulements.

7. Dispositif selon l'une des revendications 1 à 6, dans lequel :
- le châssis ferromagnétique (1) comprend deux parois longitudinales (10) parallèles contre lesquelles sont agencées les paires d'enroulements (30A, 30B, 31A, 31B) de spires électromagnétiques, lesdites parois longitudinales étant dépourvues de paroi latérale susceptible de définir les deux positions extrêmes de l'organe mobile (2),
- ledit organe mobile est formé par un chariot (20) supportant les masses aimantées (21, 22, 23), ledit chariot comprenant des éléments de guidage (24) s'étendant hors dudit châssis, lesquels éléments traversent des parois latérales (5C, 5D) au niveau d'ouvertures (210), lesdites parois latérales étant réalisées dans un matériau non ferromagnétique.

8. Dispositif selon l'une des revendications 1 à 7 dans lequel le châssis ferromagnétique (1) comprend des parois transversales (13) disposées de part et d'autre des noyaux ferromagnétiques (300A, 300B, 310A, 310B), lesdites parois transversales étant parallèles et s'étendant perpendiculairement aux parois longitudinales (10) dudit châssis.

9. Dispositif selon l'une des revendications 1 à 8 dans lequel les noyaux ferromagnétiques (300A, 300B, 310A, 310B) sont creux.

10. Dispositif selon l'une des revendications 1 à 9 dans lequel le châssis ferromagnétique (1) est réalisé en deux parties (1A, 1B) identiques disposées symétriquement par rapport à la direction de déplacement (X-X') de l'organe mobile (2).

11. Dispositif selon l'une des revendications 1 à 10, dans lequel le châssis ferromagnétique (1) est recouvert d'une carcasse (5, 5A, 5B, 5C, 5D) de protection réalisée dans un matériau non ferromagnétique, de la résine étant injectée dans ladite carcasse.

12. Dispositif selon la revendication 11, dans lequel la carcasse (5, 5A, 5B, 5C, 5D) comporte des rainures ou ailettes (50) pour évacuer les calories générées par les enroulements (30A, 30B, 31A, 31B) de spires électromagnétiques.

13. Dispositif selon l'une des revendications 1 à 12, dans lequel le châssis (1) comporte des encoches de position (4A, 4B, 4C) configurées pour dévier une partie des flux magnétiques induits par les masses aimantées (21, 22, 23), un capteur a effet Hall étant positionné dans chacune desdites encoches.

14. Utilisation du dispositif conforme à l'une des revendications 1 à 13, pour actionner un sélecteur de boîte de vitesses ou d'embrayage d'un véhicule automobile, ledit sélecteur étant relié à l'organe mobile (2).

## Patentansprüche

1. Elektromagnetische lineare Antriebsvorrichtung, umfassend:
- ein ferromagnetisches Gehäuse (1), dessen Wände (10, 11) einen Innenraum (12) begrenzen, umfassend mindestens zwei Magnetspalte (300, 310),
- ein bewegliches Element (2), umfassend eine Vielzahl von magnetisierten Massen (21, 22, 23), wobei das Element geeignet ist, linear in den Spalten entlang einer Verschieberichtung (X-X') zwischen zwei Endpositionen zu gleiten, wobei die magnetisierten Massen auf dem beweglichen Element derart angeordnet sind, dass sie durch die Magnetspalte hindurchgehen,
- mindestens zwei Wicklungspaare (30A, 30B, 31A, 31B) von elektromagnetischen Windungen, die im Inneren des Innenraums angeordnet sind, wobei die Wicklungen entlang der Verschieberichtung (X-X') des beweglichen Elements ausgerichtet sind, wobei die Wicklungen jedes Paars beiderseits des beweglichen Elements symmetrisch zur Verschieberichtung angeordnet sind, wobei die Wicklungen jeweils auf einem ferromagnetischen Kern (300A, 300B, 310A, 310B) montiert sind, der in dem Innenraum senkrecht auf die Verschieberichtung angeordnet ist, wobei die ferromagnetischen Kerne die Spalte (300, 310) begrenzen, wobei die Wicklungen nebeneinander angeordnet sind, um aneinandergrenzende Zonen (3A, 3B) aufzuweisen, die zwischen den beiden Spalten angeordnet sind und in denen die Windungsabschnitte in mindestens einer Ebene (P2, P3) senkrecht auf die Verschieberichtung angeordnet sind,
**dadurch gekennzeichnet, dass**:
- mindestens eine der magnetisierten Massen (22) derart dimensioniert ist, dass sie mindestens einen Abschnitt hat, der konstant gegenüber den Windungsabschnitten positioniert ist, die sich in den aneinandergrenzenden Zonen (3A, 3B) befinden, wenn sich das bewegliche Element (2) zwischen den beiden Endpositionen verschiebt,
- die Position der magnetisierten Massen (21, 22, 23) auf dem beweglichen Element (2) derart ist, dass jeder Magnetspalt (300, 310) konstant von mindestens einer der magnetisierten Massen durchquert wird, wenn sich das bewegliche Element zwischen den beiden Endpositionen verschiebt.

2. Vorrichtung nach Anspruch 1, bei der das bewegliche Element (2) eine zentrale magnetisierte Masse (22) und zwei seitliche magnetisierte Massen (21, 23) umfasst, die beiderseits der zentralen magnetisierten Masse angeordnet sind, wobei die Massen entlang der Verschieberichtung (X-X') des beweglichen Elements ausgerichtet sind.

3. Vorrichtung nach Anspruch 2, bei der die beiden seitlichen magnetisierten Massen (21, 23) dieselbe Polarität haben, wobei die zentrale magnetisierte Masse (22) eine umgekehrte Polarität hat.

4. Vorrichtung nach einem der Ansprüche 2 oder 3, bei der die zentrale magnetisierte Masse (22) eine größere Länge als jene der beiden seitlichen magnetisierten Massen (21, 23) hat.

5. Vorrichtung nach Anspruch 4, bei der die Länge der zentralen magnetisierten Masse (22) derart ist, dass sie einen Abschnitt umfasst, der konstant gegenüber den Windungsabschnitten positioniert ist, die sich in den aneinandergrenzenden Zonen (3A, 3B) befinden, wenn sich das bewegliche Element (2) zwischen den beiden Endpositionen verschiebt.

6. Vorrichtung nach einem der Ansprüche 1 bis 5, bei der die Wicklungen (30A, 30B, 31A, 31B) von Strom durchströmt werden, wobei dieser Strom derart angelegt wird, dass er dieselbe Richtung und dieselbe Ausrichtung in den Windungsabschnitten hat, die sich in den aneinandergrenzenden Zonen der Wicklungen befinden.

7. Vorrichtung nach einem der Ansprüche 1 bis 6, bei der:
- das ferromagnetische Gehäuse (1) zwei parallele Längswände (10) umfasst, an denen die Wicklungspaare (30A, 30B, 31A, 31B) von elektromagnetischen Windungen angeordnet sind, wobei die Längswände keine Seitenwand aufweisen, die die beiden Endpositionen des beweglichen Elements (2) definieren kann,
- das bewegliche Element von einem Schlitten (20) gebildet ist, der die magnetisierten Massen (21, 22, 23) trägt, wobei der Schlitten Führungselemente (24) umfasst, die sich außerhalb des Gehäuses erstrecken, wobei die Elemente Seitenwände (5C, 5D) auf Höhe von Öffnungen (210) durchqueren, wobei die Seitenwände aus einem nicht ferromagnetischen Material hergestellt sind.

8. Vorrichtung nach einem der Ansprüche 1 bis 7, bei der das ferromagnetische Gehäuse (1) Querwände (13) umfasst, die beiderseits der ferromagnetischen Kerne (300A, 300B, 310A, 310B) angeordnet sind, wobei die Querwände parallel sind und sich senkrecht auf die Längswände (10) des Gehäuses erstrecken.

9. Vorrichtung nach einem der Ansprüche 1 bis 8, bei der die ferromagnetischen Kerne (300A, 300B, 310A, 310B) hohl sind.

10. Vorrichtung nach einem der Ansprüche 1 bis 9, bei der das ferromagnetische Gehäuse (1) aus zwei identischen Teilen (1A, 1B) hergestellt ist, die symmetrisch zur Verschieberichtung (X-X') des beweglichen Elements (2) angeordnet sind.

11. Vorrichtung nach einem der Ansprüche 1 bis 10, bei der das ferromagnetische Gehäuse (1) mit einer Schutzabdeckung (5, 5A, 5B, 5C, 5D) bedeckt ist, die aus einem nicht ferromagnetischen Material hergestellt ist, wobei Harz in die Abdeckung eingespritzt wird.

12. Vorrichtung nach Anspruch 11, bei der die Abdeckung (5, 5A, 5B, 5C, 5D) Nuten oder Flügel (50) umfasst, um die durch die Wicklungen (30A, 30B, 31A, 31B) von elektromagnetischen Windungen erzeugten Kalorien abzuleiten.

13. Vorrichtung nach einem der Ansprüche 1 bis 12, bei der das Gehäuse (1) Positionskerben (4A, 4B, 4C) umfasst, die derart ausgeführt sind, dass sie einen Teil der von den magnetisierten Massen (21, 22, 23) induzierten Magnetströme ablenken, wobei ein Sensor mit Hall-Effekt in jeder der Kerben angeordnet ist.

14. Verwendung der Vorrichtung nach einem der Ansprüche 1 bis 13, um einen Getriebe- oder Kupplungswahlschalter eines Kraftfahrzeugs zu betätigen, wobei der Wahlschalter mit dem beweglichen Element (2) verbunden ist.

## Claims

1. Electromagnetic linear drive device, comprising:
- a ferromagnetic frame (1) whose walls (10, 11) delimit an internal space (12) comprising at least two magnetic air gaps (300, 310),
- a mobile member (2) comprising a plurality of magnetized masses (21, 22, 23), said member being suitable for sliding linearly in said air gaps, in a direction of displacement (X-X'), between two extreme positions, said magnetized masses being arranged on said mobile member so as to be able to pass through said magnetic air gaps,
- at least two pairs of windings (30A, 30B, 31A, 31B) of electromagnetic turns positioned inside said internal space, said windings being aligned along the direction of displacement (X-X') of said mobile member, the windings of each so-called pair being positioned on either side of said mobile member, symmetrically relative to said direction of displacement, said windings being each mounted on a ferromagnetic core (300A, 300B, 310A, 310B) positioned in said internal space, at right angles to said direction of displacement, said ferromagnetic cores delimiting said air gaps (300, 310), said windings being juxtaposed side by side so as to exhibit adjacent areas (3A, 3B) arranged between the two so-called air gaps and in which the portions of turns are situated in at least one plane at right angles (P2, P3) to said direction of displacement,
**characterized in that**:
- at least one of the magnetized masses (22) is dimensioned so as to have at least one portion constantly positioned facing said portions of turns situated in said adjacent areas (3A, 3B) when said mobile member (2) is displaced between the two extreme positions,
- the position of the magnetized masses (21, 22, 23) on the mobile member (2) is such that each magnetic air gap (300, 310) is constantly passed through by at least one of said magnetized masses when said mobile member is displaced between the two extreme positions.

2. Device according to Claim 1, in which the mobile member (2) comprises a central magnetized mass (22) and two lateral magnetized masses (21, 23) positioned on either side of said central magnetized mass, said masses being aligned in the direction of displacement (X-X') of said mobile member.

3. Device according to Claim 2, in which the two lateral magnetized masses (21, 23) have the same polarity, the central magnetized mass (22) having a reverse polarity.

4. Device according to one of Claims 2 or 3, in which the central magnetized mass (22) has a length greater than that of the two lateral magnetized masses (21, 23).

5. Device according to Claim 4, in which the length of the central magnetized mass (22) is such that it includes a portion constantly positioned facing said portions of turns situated in said adjacent areas (3A, 3B), when the mobile member (2) is displaced between the two extreme positions.

6. Device according to one of Claims 1 to 5, in which the windings (30A, 30B, 31A, 31B) are passed through by current, which current is applied so as to have the same line and the same direction in the portions of turns situated in the adjacent areas of said windings.

7. Device according to one of Claims 1 to 6, in which:
- the ferromagnetic frame (1) comprises two parallel longitudinal walls (10) against which the pairs of windings (30A, 30B, 31A, 31B) of electromagnetic turns are arranged, said longitudinal walls not having any lateral wall likely to define the two extreme positions of the mobile member (2),
- said mobile member is formed by a carriage (20) supporting the magnetized masses (21, 22, 23), said carriage comprising guiding elements (24) extending out of said frame, said elements passing through the lateral walls (5C, 5D) at the level of openings (210), said lateral walls being produced in a non-ferromagnetic material.

8. Device according to one of Claims 1 to 7, in which the ferromagnetic frame (1) comprises transverse walls (13) positioned on either side of the ferromagnetic cores (300A, 300B, 310A, 310B), said transverse walls being parallel and extending at right angles to the longitudinal walls (10) of said frame.

9. Device according to one of Claims 1 to 8, in which the ferromagnetic cores (300A, 300B, 310A, 310B) are hollow.

10. Device according to one of Claims 1 to 9, in which the ferromagnetic frame (1) is produced in two identical parts (1A, 1B) positioned symmetrically relative to the direction of displacement (X-X') of the mobile member (2).

11. Device according to one of Claims 1 to 10, in which the ferromagnetic frame (1) is covered by a protective field frame (5, 5A, 5B, 5C, 5D) produced in a non-ferromagnetic material, resin being injected into said field frame.

12. Device according to Claim 11, in which the field frame (5, 5A, 5B, 5C, 5D) comprises grooves or fins (50) for discharging the calories generated by the windings (30A, 30B, 31A, 31B) of electromagnetic turns.

13. Device according to one of Claims 1 to 12, in which the frame (1) comprises position notches (4A, 4B, 4C) configured to deflect a portion of the magnetic flows induced by the magnetized masses (21, 22, 23), a Hall-effect sensor being positioned in each of said notches.

14. Use of the device according to one of Claims 1 to 13, to actuate a gearbox or clutch selector of a motor vehicle, said selector being linked to the mobile member (2).
